# EUROPEAN PATENT APPLICATION

(11) **EP 2 648 054 A1**
(43) Date of publication of application: **09.10.2013**
(21) Application number: 12162953.9
(22) Date of filing: 03.04.2012
(51) Int. Cl.: G05B 19/042, G05B 19/418

(54) **Evaluating consequences of a fault in an industrial process**

(71) Applicant: ABB Research Ltd., 8050 Zürich (CH)
(72) Inventor: Mikkelsen, Christine, 725 91 Västerås (SE); Jakobsson, David, 931 46 Skellefteå (SE); Lundeholm, Filip, 415 01 Göteborg (SE); Savo, Isak, 724 71 Västerås (SE)
(74) Representative: Savela, Reino Aleksi

(57) **Abstract**

The invention relates to a method, process monitoring computer and a computer program product for evaluating consequences of a delayed activity (A₁) in an industrial process, the activity is performed via a machine and presented in a chart depicting consecutive activities performed at different production points (PP₁, PP₂, PP₃) , the process monitoring computer comprising a control unit that receives an operator selection of simulation of delay in the activity (A₁), which activity is an original delayed activity, determines the delays (D_{P}) of later activities (A₂, A₃) of the same machine, which activities are caused primary delayed activities (A₂, A₃), determines for these delayed activities if a following activity has been delayed, where such a following activity being delayed is a caused secondary delayed activity (A₄, A₅), determines the delays (Dₛ) of the caused secondary delayed activities, and presents all the delays in the chart.

## Description

### FIELD OF THE INVENTION

The present invention generally relates to process monitoring computers in process control systems. More particularly the present invention relates to a method, process monitoring computer and a computer program product for evaluating consequences of a delayed activity in an industrial process.

### BACKGROUND

Some industrial processes, such as mining processes, are suitable for being monitored using Gantt charts. In this type of process there are typically different production points, i.e. areas where activities in the process are taking place. Furthermore the activities performed at a production point are often performed by various machines. In a Gantt chart there are a number of horizontal rows and in these rows a number of consecutive items are shown. The rows can in a mining application be associated with a production point, in which a number of consecutive activities in the process at the production point are shown. They may also be associated with machines. The horizontal dimension of the chart is then the time. The items may in this type of application thus be activities in the process.

These charts may be used for the planning of the process.

The use of Gantt charts is for instance described in US 6,919,865, where there is a presentation of a revised Gantt chart for an activity in the case of an anomalous situation such as when maintenance is needed.

JP 2009-37587 discusses the presenting of a number of processes in a Gantt chart, each comprising a number of tasks.

JP 6-12544 discloses the prediction of the start and end time of a future process on the basis of past operation results and contents of a production schedule file.

However if there is a disruption in an activity, such that it becomes delayed, it is hard for an operator to see how this delay effects other activities. This can lead to serious problems, for instance if there are common time intervals where the number of activities that are to be performed should be limited, for instance because of security.

The present invention addresses one or more of the above motioned problems.

### SUMMARY OF THE INVENTION

The present invention addresses this situation. The invention is therefore directed towards solving the problem of improving user friendliness in relation to evaluation of delays in an industrial process.

This object is according to a first aspect of the invention solved through a method of evaluating consequences of a delayed activity in an industrial process, the activity being performed at least partly via a machine and presented for an operator in a chart depicting consecutive activities performed at different production points, the method comprising the steps of:
- receiving an operator selection of simulation of delay in the activity performed by the machine, which activity is an originally delayed activity,
- determining the delays of later activities of the same machine, which activities are caused primary delayed activities,
- determining for the originally delay activity and each caused primary delayed activity if a following activity will be delayed, where such a following activity being delayed is a caused secondary delayed activity,
- determining the delays of the caused secondary delayed activities, and
- presenting all the delays in the chart.

This object is according to a second aspect of the invention solved through a process monitoring computer for evaluating consequences of a delayed activity in an industrial process, the activity being performed at least partly via a machine and presented for an operator in a chart depicting consecutive activities performed at different production points, the process monitoring computer comprising
a control unit configured to
- receive an operator selection of simulation of delay in the activity performed by the machine, which activity is an original delayed activity,
- determine the delays of later activities of the same machine, which activities are caused primary delayed activities,
- determine for the original delayed activity and each caused primary delayed activity if a following activity will be delayed, where such a following activity being delayed is a caused secondary delayed activity,
- determine the delays of the caused secondary delayed activities, and
- present all the delays in the chart via a display of the operator.

This object is according to a third aspect of the invention solved through a computer program product for evaluating consequences of a delayed activity in an industrial process, the activity being performed at least partly via a machine and presented for an operator in a chart depicting consecutive activities performed at different production points, the computer program product being provided on a data carrier comprising computer program code configured to cause a process monitoring computer to, when said computer program code is loaded into the process monitoring computer,
- receive an operator selection of simulation of delay in the activity performed by the machine, which activity is an original delayed activity,
- determine the delays of later activities of the same machine, which activities are caused primary delayed activities,
- determine for the original delayed activity and each caused primary delayed activity if a following activity will be delayed, where such a following activity being delayed is a caused secondary delayed activity,
- determine the delays of the caused secondary delayed activities, and
- present all the delays in the chart.

The present invention has a number of advantages. It enables an operator to test how a schedule would be affected if one activity is delayed. The operator is thus able to test "what if scenarios" before doing actual rescheduling. This is also done utilizing the information about a chain of activities that exists in a planning system today, which has not been possible before. The invention also reduces cognitive strain when working with large Gantt charts, leading to increased productivity. The operators will have a quick way to understand the consequences of unexpected events and when a rescheduling is needed.

### BRIEF DESCRIPTION OF THE DRAWINGS

The present invention will in the following be described with reference being made to the accompanying drawings, where
Fig. 1 schematically shows a process control system 10 for an industrial process comprising a number of machines at different production points,
Fig. 2 schematically shows a process monitoring computer of the present invention,
Fig. 3 schematically shows icons representing different types of activities in the industrial process,
Fig. 4 shows part of a first Gantt chart being presented on a display of the process monitoring computer,
Fig. 5 schematically shows an operator selection of a delay simulation in the first Gantt chart,
Fig. 6 schematically shows simulated delays after a first operator selection,
Fig. 7 schematically shows simulated delays after a second operator selection,
Fig. 8 schematically shows a flow chart of a number of method steps being performed in a first part of a method of evaluating consequences of a delayed activity,
Fig. 9 schematically shows an operator selection of presenting an activity chain for a machine in a second Gantt chart,
Fig. 10 schematically shows the presenting of an activity chain for a machine in the second Gantt chart,
Fig. 11 schematically shows a flow chart of a number of method steps being performed in a second part of a method of evaluating consequences of a delayed activity, and
fig. 12 schematically shows a data carrier with computer program code for performing the steps of the method.

### DETAILED DESCRIPTION OF THE INVENTION

In the following, a detailed description of preferred embodiments of a method, an operator terminal and a computer program product for enabling an operator to make control related decisions in a process control system.

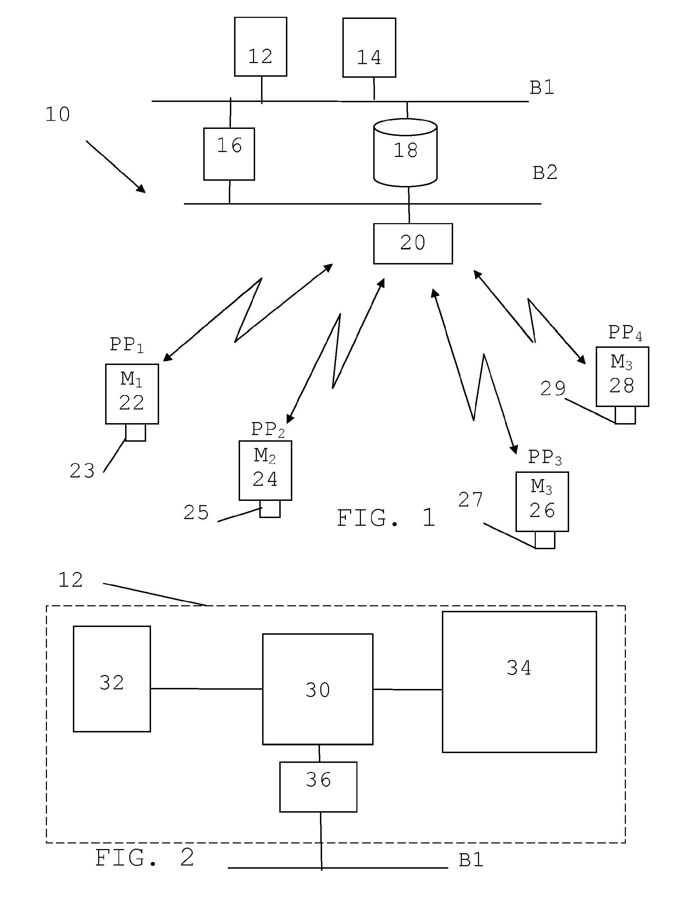

Fig. 1 schematically shows a computerized process control system 10 for controlling an industrial process. The process is with advantage a mining process, for instance the obtaining of minerals in a mine. However, the invention can also be applied in other industrial processes such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other processes. The process may be monitored through one or more process monitoring computers, which communicate with a server handling monitoring and control of the process.

In fig. 1 the system 10 therefore includes a number of process monitoring computers 12 and 14. These computers may here also be considered to form operator terminals and are connected to a first data bus B1. There is furthermore a second data bus B2 and between the first and second data busses B1 and B2 there are connected a server 16 providing control and protection of the process and a database 18 where data relating to control and monitoring of the process is stored. Such data relating to control and monitoring may here comprise process control data such as measurements and control commands, while data relating to monitoring may comprise alarm and event data as well as data on which alarms and events can be generated, such as measurements made in the process. To the second data bus B2 there is furthermore connected a system interface, for instance in the form of a wireless gateway 20. In the industrial system there are furthermore a number of machines 22, 24, 26 and 28 involved in the process. These machines may be provided at different production points. The machines may furthermore be provided with sensors for sensing properties of either the process or the machines themselves as well as with means for communicating with the system. A property of the process may for instance be the depth of drilling performed or the amount of rock loaded on a truck, while the property of a machine may be the status of an engine of a truck or a drill. The machines are furthermore typically involved in activities, which activities may be controlled through the server 16. Examples on activities in the field of mining is drilling, loading rock and blasting.

The sensors may be combined with means for communication and may therefore be wireless sensors communicating according to a suitable industrial wireless communication standard such Wireless Hart. The machines are furthermore with advantage mobile and thus able to move around between the different production points.

In fig. 1 there is shown a first exemplifying machine M₁ 22 with a first sensor 23 at a first production point PP₁, a second exemplifying machine M₂ 24 with a second sensor 25 at a second production point PP₂, a third exemplifying machine M₃ 26 with a third sensor 27 at a third production point PP₃₆ as well as a fourth machine 28 with a fourth sensor 29 at a fourth production point PP₄. The figure suggests that there may be a one to one correspondence between the number machines and the number of production points. However, the invention is in no way limited to such a scenario. There may be more machines than production points and vice versa. As can be understood from fig. 1 the first machine 22 may be moved to any of the other production points and it is also possible that at some point in time no machine is located at a certain production point. At other instances it is possible that more than one machine is located at a production point.

The sensor of a machine thus senses properties of the process and/or of the machine and reports these data to the server 16 via the wireless gateway 20, which server 16 then stores the data in the database 18.

The server 16 may here receive measurements of the process as well as status data concerning their operation from the machines and control the process based on these measurements. It can also generate alarm and event data that may be presented via the process monitoring computers 12 and 14 based on status data and measurements. It can also shut down the process. It furthermore also stores historical process control and alarm and event data in the database 18.

It is furthermore possible that in the example of figure 1, the process control system 10 may belong to the group of SCADA (Supervisory Control And Data Acquisition) systems.

The process monitoring computers 12 and 14 in the process control system 10 may each provide a user interface. In the following the details of such a computer is explained based on the example of the process monitoring computer 12, shown in figure 2. The process monitoring computer 12 includes a user input unit 32, a display 34, a control unit 30 and an interface 36 for communicating with the system 10 via the first data bus B1. The process monitoring computer 12 provides a graphical user interface for an operator of the control system 10. The control unit 30 may be a processor with an associated program memory including program code for performing the functionality of the present invention, which will be described later on. The user input unit 32 is a unit through which a user of the operator terminal 12 may enter data. As such it may be a keyboard, a keypad or a mouse. It may also be combined with the display 34 in order to form a touch screen. The process monitoring computer 12 may also include other user interfaces such as a speaker or a microphone in order to present and receive data to and from one or more users of the process monitoring computer in other ways than through the display and keyboard. Such a user is in the following termed an operator. A process monitoring computer in a process control system is only one example of a computer in which the present invention may be realized. It is also possible that the display and user input unit are provided as a separate entity in the form of a thin client or work station communicating with a process monitoring computer performing the function is described in more detail below.

Process control data can be collected from the machines and other sensors and stored in the history database 18 by the server 16 as well as presented in real-time to an operator via the display 34.

The server 16 may obtain a large amount of real time measurement data that is saved in the database 18. The graphical user interface of process monitoring computers 12 or 14 supports the operator to control the system 10.

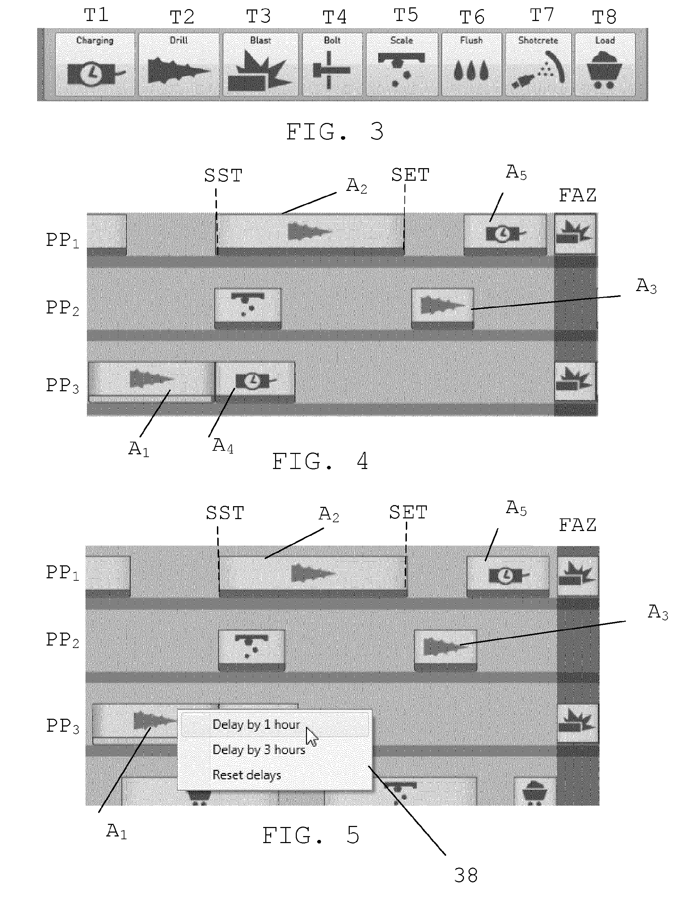

As is mentioned above, a number of activities may be performed in the process. These activities are typically performed by the machines. On the displays 34 of process monitoring computer 12 and 14 there may be shown graphical symbols of these activities. Fig. 3 gives an example of a number of different graphical symbols, here in the form of icons, which icons depict different types of activities.

In the exemplified mining application there are here eight different types of activities shown. There is here a first type T1, which is a charging activity. This is an activity where a charge of explosives is provided. There is also shown a second type of activity T2, which is a drilling activity, such as the drilling of a hole in which explosives may be inserted. There is a third type of activity T3, which is a blasting activity, i.e. an activity where explosives are blasted. There is a fourth type of activity T4, a bolting activity, a fifth type of activity T5, a scaling activity, a sixth type of activity T6, a flushing activity, a seventh type of activity T7, a shotcreting activity, and finally an eight type of activity T8, a loading activity. The icons here graphically illustrate the activities. These activities are mere examples of activities and it should be realized that there may be more or fewer activities as well as obviously also other types of activities.

The activities being performed in the process may then be depicted in one or more charts.

One view of a part of a chart that may be shown for an operator on the display 34 of a process monitoring computer 12 is depicted in fig. 4. This chart depicts consecutive activities performed at different production points in the industrial process, of which at least some activities are performed via one or more of the machines. In this example the chart is a Gantt chart.

The Gantt chart shows a number of rows, where each row is concerned with a production point.

On a row there is furthermore displayed a number of activities, which activities in this example are the consecutive activities to be performed at a production point. In the example of machines the activities would be the activities of a machine. The activities are furthermore the activities to be performed after each other in time. Each activity is here depicted as a box where one side, the leftmost vertical side of the box corresponds to a starting time of the activity and the opposite, the rightmost vertical side, corresponds to the end time of the activity. The boxes are also provided with the symbols indicating the type. The horizontal length of a box here represents the duration of the activity.

In fig. 4 there are thus shown a number of consecutive activities per row. There is here shown the activities of the first, second and third production points PP₁ PP₂ and PP₃.

The activities shown are the activities that have been scheduled for the different production points, i.e. the ones that have been planned in advance.

There is in fig. 4 indicated a first activity A₁, which is an activity being scheduled for being performed at the third production point PP₃, in this example by the third machine 26, a second activity A₂, which is an activity being scheduled at the first production point PP₁ and performed after the first activity A1. This second activity A₂ is in this example also performed by the third machine 26. There is also a third activity A₃, which is an activity being performed at the second production point PP₃ after the second activity A₂, which third activity A₃ is also performed by the third machine 26. These first, second and third activities A₁, A₂ and A₃ are furthermore all of the same type, here exemplified by the second type T2 and are thus drilling activities.

In fig. 4 there is also shown a fourth activity A₄ being performed at the third production point PP₃ after the first activity A₁. This fourth activity A₄ is of the first type T1, and hence an exemplifying charging activity, which may be performed by the first machine 22. There is also a fifth activity A₅ being performed at the first production point PP₁ after second activity A₂, also this fifth activity A₅ is of the first type T1. This fifth activity A₅ may also be performed by the first machine 22. It should however be realized that the fourth and fifth activities A₄ and A₅ do not need to be performed by the same machine. Different machines may perform them. In fact these activities need no be performed by a machine at all. It is possible that also humans can perform the fourth and the fifth activities A₄ and A₅. There is also shown an activity of the fifth type T5 being performed at the second production point PP₂. However this activity will not be described any further, because it will not be used in the description of the functioning of the present invention.

In fig. 4 the starting time and end time of the second activity A₂ are indicated. There times are scheduled starting time SST and scheduled end time SET, since these times are the starting and end times according to schedule. Even though the scheduled starting time SST and scheduled end time SET are being shown only for the second activity, it should be realized that all activities have such scheduled starting times and scheduled end times and are all originally presented with these. In fig. 4 there is furthermore indicated a scheduled fixed activity zone FAZ. In this fixed activity zone FAZ there is performed an activity that is of a type that is critical. This critical activity is here of the third type T3, i.e. blasting, which is a hazardous activity. A hazardous activity is one type of critical activity. The critical activity is here performed at both the first and third production points PP₁ and PP₃. It may furthermore be critical for more than one production point as well as be critical for other production points than those where it is performed. It is thus possible that other activities are not allowed to be performed at at least some of the production points in this fixed activity zone. Activities of a critical type may only be performed at fixed times defined by a fixed time zone. In this example no other activity is allowed at any of the production points. This here means that although the third critical type of activity is only performed at the first and third production points PP₁ and PP₃ other activities are not allowed at the same time as this activity is performed at the second production point PP₂ either, even though no activity of the third type T3 is being performed there. A critical activity is not limited to being hazardous. A critical activity may also be critical in other senses, such as time critical. This means that if a time critical activity is not performed according to schedule, then other activities or processes may be influenced. An activity involving service of the machine may as one example be such a time critical activity if the scheduled service time is the only available service time. If such a scheduled service time is missed, then the machine may not be allowed to be used, which has a negative influence on the production. It should here be realized that also he blasting activity may also be considered to be time critical.

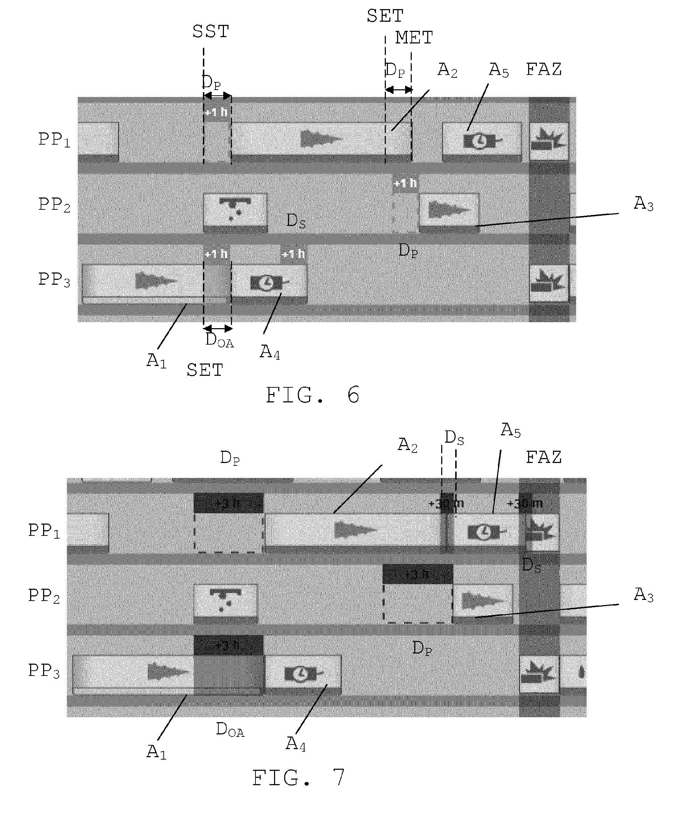

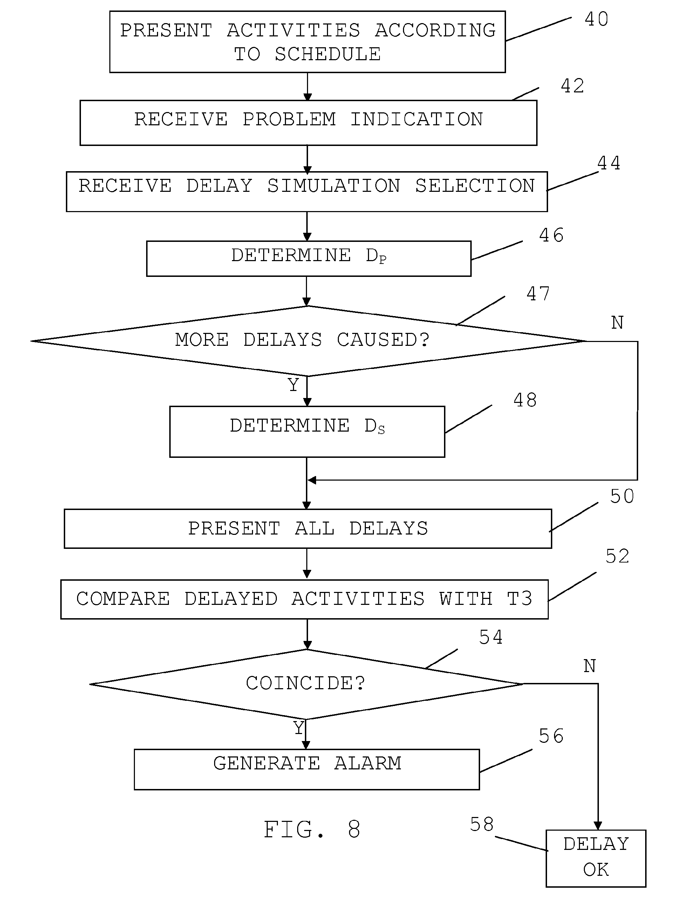

The functioning of a first part of a first embodiment of the invention will now be described with reference being made to fig. 1 - 4, as well as to fig. 5, 6, 7 and 8, where fig. 5 shows an operator selection of a delay simulation in the Gantt chart of fig. 4, fig. 6 schematically shows simulated delays after a first operator selection, fig. 7 schematically shows simulated delays after a second operator selection, and fig. 8 shows a flow chart of a number of method steps being performed by the process monitoring computer.

Gantt charts are commonly used by operators when planning activities in industrial processes such as mining processes. Operators for underground mines use Gantt schedules when planning and maintaining the schedules for workers, machines and production points.

As mentioned above, each row in the Gantt chart typically represents one production point and the activities on one production point are assigned to various machines. One machine is typically scheduled for several following activities during one shift and this make the schedule sensitive for unexpected events.

The problem is that unexpected events happen all the time during a production shift; machines malfunction, necessary material runs out, activities take longer time than expected etc. If an event happens that causes a delay of an activity, the operator needs to understand the consequence. He or she needs to understand if the following activities on the production point where the delay occurred will also be delayed as well as if following activities of the machine involved in the delay will cause delays on other production points. In the end he or she needs to know if there is a chain of delays causing a failed scheduled blast. Existing Gantt planning system do not support the operator to understand the cause of events and this is one problem that the invention addresses.

The method of the first part of the invention will in the following be described in relation to a delay in the first activity A₁ being performed at least partly by or via the third machine 26 at the third production point PP₃. It should however be realized that the method steps can be performed based also on other activities being delayed in the chart in the same manner. Furthermore before the method is started the activities have been scheduled, which scheduling may have been made by the operator. The activities are here at least partly performed by the machines at the production points. In the scheduling each activity receives a scheduled start time SST and a scheduled end time SET.

The method thus starts with the control unit 30 presenting the activities in the industrial process in a chart depicting consecutive activities performed at different production points. It thus present the Gantt chart according to schedule on the display 34, step 40, where all activities are being presented with their scheduled start times SST and scheduled end times SET. The scheduled data comprising the scheduled start time SST and scheduled end time SET of all activities may be stored locally in the process monitoring computer 12. As an alternative it may be stored in the database 18 and fetched therefrom by the control unit 30 of the process monitoring computer 12.

Thereafter the control unit 30 receives a problem indication from the third machine 26, step 42. This may be an automatic alarm from a machine that there is a problem in the activity, such as the machine being faulty and needing repair. It is as an alternative possible that the operator of the process monitoring computer receives information about a problem orally or visually from a machine operator at the production point. In case of an oral or visual reception of such information by the operator of the process monitoring computer then he or she may change status of the machine in the system through manually entering a problem indication concerning the problem in the system.

As the problem indication is being received, the control unit 30 may signal the reception to the operator via the display 34. This signalling may be performed through changing the symbol of the activities being scheduled for the machine, in this example the reception of the problem indication may be signalled through changing the colour of the symbol of the activity, for instance through making it red. It is here possible that all symbols associated with the activities performed by the machine are indicated in this way. It is of course possible with other types of indications, such as changing the size or the appearance of the graphical object, for instance through displaying a broken drill. The control unit 30 thus changes the symbol of the activities A₁, A₂ and A₃ in order to signal to the operator that the problem indication has been received with regard to the third machine 26.

The operator may now select a delay simulation mode, which selection may be made in a window 38 displayed over the chart. The operator may make this selection with a suitable interaction such as right clicking in a context menu or clicking on a button in a menu bar etc. In this way the operator tells the control unit 30 to calculate the effects on the schedule if an activity will be delayed with a certain time.

In the window 38 the operator may as an example select between various delays, here exemplified by a one hour delay and a 3 hour delay. The operator may also be able to reset delays. The operator selections are here typically received via the user input unit 32. As an alternative it is possible that the control unit 30 estimates the delay based on the problem indication. In such an estimation it is possible to consider facts as the time required to send a repair crew to the machine, estimated repair time and time to replace the machine with another machine. The operator may also call (or get the info from the system) from the machine operator to get an estimated time to repair the machine. If the problem is a hydraulic hose the machine operator might be able to replace it within one hour but if it is something more problematic it might take longer.

It is here also possible that the operator selects an original delayed activity that is to form the basis for the simulation. As an alternative it is possible that the activity which the third machine 26 is currently scheduled to perform as the indication is received is selected to be the original delayed activity. This means that the control unit 30 may automatically select an activity which the third machine 26 is scheduled to perform at the point in time that the problem indication is received to be the original delayed activity. An original delayed activity is here an activity the delay D_{OA} of which may cause other activities to be delayed. These other delays may be the delays of later activities of the same machine, in which case they are caused primary delays, or delays in other activities not performed by the first machine, for instance performed by other machines, which activities normally follow after activities of the third machine. These latter activities are caused secondary delayed activities and may be activities that are consecutive to the original delayed activity and caused primary delayed activities. In the example of fig. 4 - 7, the first activity A₁ is an original delayed activity, the second and third activities A₂ and A₃ are caused primary delayed activities and the fourth and fifth activities A₄ and A₅ are both caused secondary delayed activities in fig. 7, but only the fourth activity A₄ is a caused secondary delayed activity in fig. 6.

Fig. 6 and 7 here show two different delay selections. In fig. 6 the operator has selected a one hour delay, while in fig. 7 the operator has selected a three hour delay.

As the control unit 30 receives the operator selection of a simulation of delay in the activity A₁ performed by the third machine 26, step 44, which is a selection of an original delayed activity and a corresponding delay D_{OA}, the control unit 30 then calculates how the delay would affect the schedule.

It first determines the delay D_{P} of later activities of the same machine, i.e. the caused primary delayed activities A₂ and A₃, step 46. In one variation of the invention, the control unit assigns the same delay to the caused primary delayed activity as the delay of the original delayed activity. This is shown in fig. 6 and 7. As an alternative the delay D_{P} of a caused primary delayed activity is determined as the delay of the previously performed activity of the machine adjusted with a possible period of inactivity and perhaps also time of transportation of the machine between production points. The delay D_{P} of the first caused primary delayed activity A₂ may thus be determined as the delay of the original delayed activity A₁ adjusted with possible periods of inactivity in-between and the time of transportation from the third to the first production point PP₃ and PP₁ of the third machine 26. The delay D_{P} of the second caused primary delayed activity A₃ may in a similar manner be determined as the delay of the first caused primary delayed activity A₂ adjusted with possible periods of inactivity in-between and the time of transportation from the first to the second production point PP₁ and PP₂. The delay of a caused primary delayed activity may thus be determined as the delay of the original delayed activity adjusted with possible periods of inactivity and time of transportation in-between the original caused activity and the caused primary delayed activity for which the delay is determined. This also means that the scheduled end time SET of a caused primary delayed activity is adjusted or displaced to a modified end time MET corresponding to the delay, as can be seen in fig. 6.

After the control unit 30 has determined the delay D_{P} of the caused primary delayed activities, it then proceeds and investigates if any more delays are caused in following activities, i.e. if the delays D_{OA} and D_{P} of the original delayed activity A₁ and caused primary delayed activities A₂ and A₃ are the root of caused secondary delayed activities. This typically happens if a delay D_{OA} of the original delayed activity A₁ and/or a caused primary delayed activity moves or displaces the activity end time to a modified end time MET that is after the scheduled start time of a following activity.

If there are no such caused secondary delayed activities, step 47, then all delays are being presented in the chart, step 50, while if there are caused secondary delayed activities, the delays D_{S} of these are then determined, step 48.

Such a delay D_{S} may here be determined as the delay of the previous activity on the same production point minus any possible period of inactivity between this previous activity and the caused secondary delayed activity, where the previous activity is performed by the machine involved in the originally delayed activity.

It can as an example be seen that in fig. 4, the fourth activity A₄ follows immediately after the first activity A₁. This means that this fourth activity A₄, which is a first caused secondary delayed activity will receive the delay D_{OA} of the original delayed activity, which in fig. 6 is one hour and in fig. 7 three hours.

However, the fifth activity A₅, which follows after the first caused primary delayed activity A₂, is according to the scheme shown in fig. 4 and 5 separated from this activity A₂ with a period of inactivity that is longer than 1 hour and here as an example about 2.5 hours. This means that in the case of a delay of one hour, then this activity A₅ is not delayed as can be seen in fig. 6, and hence the activity is not a caused secondary delayed activity, while if the delay is three hours, see fig. 7, then this fifth activity A₅ will be a second caused secondary delayed activity. In this latter case the fifth activity A₅ will furthermore be delayed by a delay that is the delay Dp of the first caused primary delayed activity A₂ minus the time of inactivity. The delay Dₛ of this second caused secondary delayed activity will in this case be half an hour.

Also here the scheduled end time SET of a caused secondary activity is adjusted or displaced to a modified end time MET corresponding to the delay.

Thereafter the control unit proceeds and presents all the delays in the chart, step 50.

This presentation may here involve presenting the delay of the original delayed activity through adjusting the scheduled end time with the delay D_{OA}. The delay may be shown as a change in a part of the presentation of the activity. The added length of the activity corresponding to the delay may for instance differ from the original, for instance in shape, but also in color, such as being red, or shaded, where the original color may be gray or blue. The presentation of the delay may be further enhanced through presenting an additional box, of different color, overlaid on the end of the adjusted activity. Such a box may also include symbols, such as text and numbers indicating the delay.

The presentation of the caused primary delayed activities may be changed so that the scheduled starting and end times are adjusted or displaced with the delay D_{P}. The delay D_{P} may here be indicated through marking the area between the scheduled starting time SST and the new starting time. This marking may be made through a dashed box, sized according to the delay, where the part of the dashed box that is aligned with the box representing the activity may be empty or transparent and the rest of the box being colored, such as red, and also including symbols, such as text and numbers indicating the delay.

Also the presenting of the caused secondary activities may be changed so that the scheduled starting and end times may be adjusted or displaced with the delay Dₛ. Here the delay D_{S} may be further presented through visualizing the difference between the adjusted end time and the scheduled end time. This visualizing may be done through providing a box over the last part of the activity, if this delay D_{S} does not cause any further delays. If the delay D_{S} of the caused secondary delayed activity causes even further delays, the box, sized according to the delay, may be overlaid over both the activity itself and the following activity, where one half of the box is overlaid over one of the activities and the other half over the other. In case the previous activity is a caused primary activity, then a further box may be overlaid over the interface between these two boxes in the same manner. This is shown in fig. 7 in relation to the fifth activity A₅. Also here it is possible to use shading, different colour and text.

It is possible that the end of a delayed activity may coincide with a critical activity T3, such as a time critical activity. Such a situation is shown in fig. 7. This situation may be handled in a special way.

The control unit 30 may compare the modified end times MET of the delayed activities, i.e. of the original delayed activity, of the caused primary activities and the caused secondary activities, with the scheduled start and end times of the critical activities, which in this example is set as the fixed activity zone FAZ, step 52. If now any of these delayed activities coincide with critical activities, through going into the fixed activity zone, which happens when the modified end time MET coincides with the scheduled fixed activity zone FAZ, i.e. having a time value being in such a zone, then the control unit 30 indicates this to the operator. The indication may be made through the control unit 30 generating an alarm if any delayed activity coincides with the scheduled critical activity, step 56. The alarm may be accompanied with a request for rescheduling. However if no activity coincides with the critical activity then the delays are possible to handle without rescheduling the activities, step 58.

As can be seen in the two examples of fig. 6 and 7 the 1 hour delay does not require a rescheduling because no delayed activities coincide with critical activities or enter the fixed activity zone and therefore the delays do not cause any blast activity to be delayed. However, the 3 hour delay example shows that the time buffer between the activities are not enough and in the end one critical blast activity will coincide with a delayed activity and consequently also be delayed.

It is in this way possible for the operator to test how the schedule would be affected if one activity is delayed. The operator is thus able to test "what if scenarios" before doing the actual rescheduling. This is also done utilizing the information about the chain of activities that exists in the planning system today, which has not been possible before. The invention also reduces cognitive strain when working with large Gantt charts, leading to increased productivity. The operators will have a quick way to understand the consequences of unexpected events and when a rescheduling is needed.

It is possible for an operator to want to get more information out of the charts.

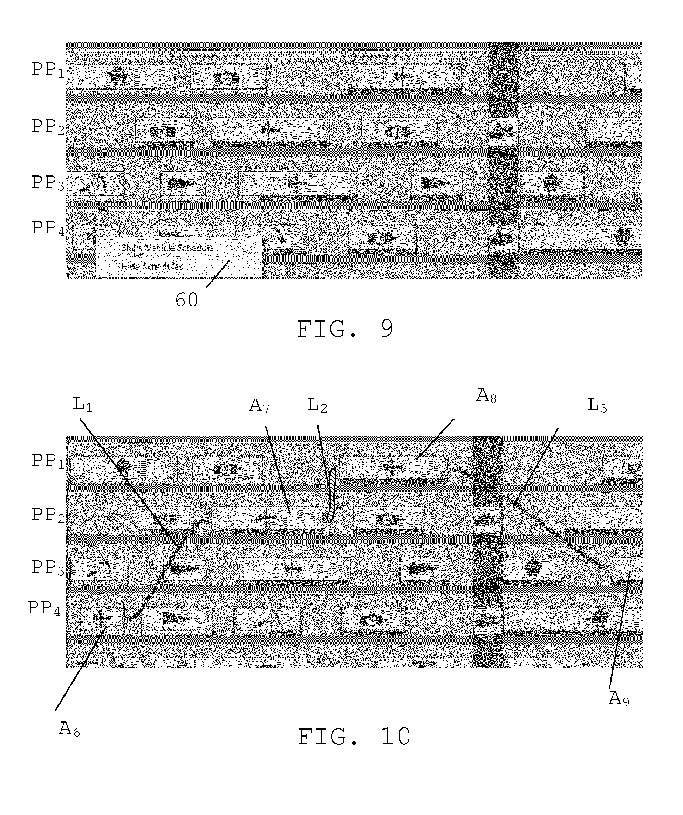

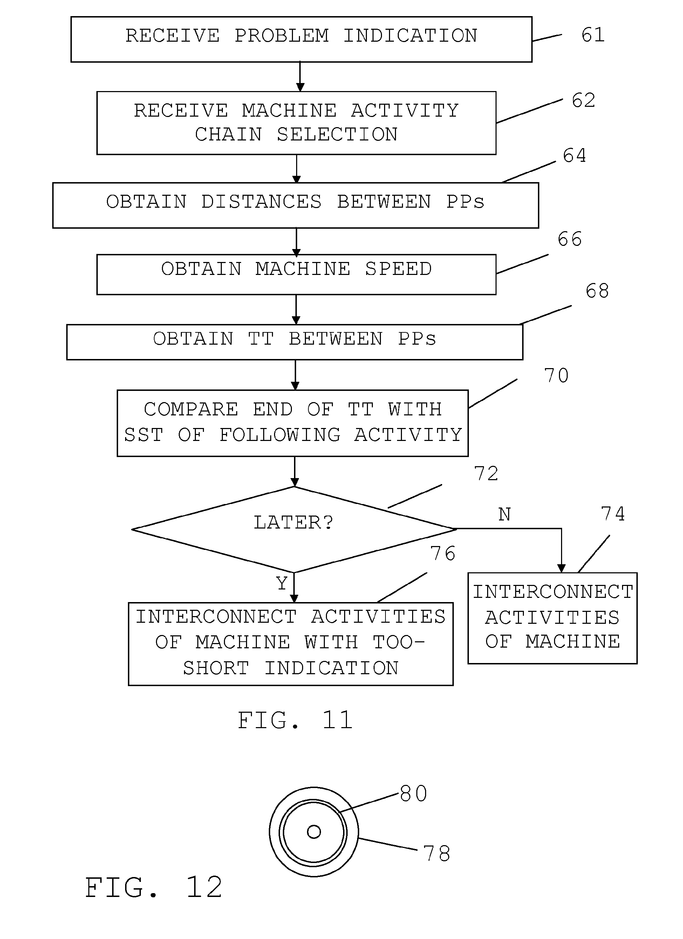

A second part of the first invention is directed towards this. This second part will now be described with reference being made to fig. 9 - 11, where fig. 9 schematically shows an operator selection of presenting an activity chain for a machine in a second Gantt chart, fig. 10 schematically shows the presenting of an activity chain for a machine in the second Gantt chart and fig. 11 schematically shows a flow chart of a number of method steps being performed in a second part of the method of evaluating consequences of a delayed activity.

The Gantt charts of fig. 9 and 10 show another situation than the one depicted in fig. 4 - 7. It should however be realized that the activities performed here in the second part may be combined with the activities of the first part of the invention. It should thus be realized that the functionality described in the following can be applied on the activities performed earlier in relation to the third machine 26.

In fig. 9 there is shown a Gantt chart with four different production points PP1, PP2, PP3 and PP4. However, it is hard to see which activities are associated with which machine. This may also be of interest to know for the operator. That is what the second part of the present invention is directed towards.

It is thus not easy to follow a specific machine's chain of events. This may be necessary if there is a problem with the machine and the operator needs to understand how that would affect the schedule.

It is possible to provide separate Gantt charts focused on the activities of the machines instead, i.e. with rows dedicated to machines. It is then possible to see if a machine is scheduled on more than one activity at a time, which cannot be seen in the "production point view". An operator may therefore need to switch between the two views to do the scheduling or to understand if there is a problem with the schedule.

Another problem is that the distance between two activities are not taken into account in the system. It is up to the operator to do the scheduling to make sure that there is enough time to move from one activity location to another.

The second part of the method may also start with the control unit 30 of the process monitoring computer 12 receiving a problem indication from a machine, step 61. In this example it is a problem indication from the fourth machine 28. This may be an automatic alarm from the machine that there is problem in the activity, such as the machine being faulty and needing repair.

As the problem indication is being received, the control unit 30 may signal the reception to the operator via the display 34.

The operator may now select a machine activity chain visualization mode, which selection may be made in a window 60 displayed over the chart. The operator may thus make this selection with a suitable interaction such as right clicking in a context menu or clicking on a button in a menu bar etc. The control unit 30 thus receives the machine activity chain selection, step 62, and through this selection the operator tells the control unit 30 to interconnect the activities of the machine.

In a window the operator may as an example select between showing of a vehicle schedule, if the machine is a vehicle, and to hide such schedules. The operator selections are here typically received via the user input unit 32. As an alternative it is possible that the control unit 30 determines that the machine activity chain visualization mode is to be entered automatically as the indication is received.

Two consecutive activities of the machine 28 may be performed at two different production points. Therefore the control unit 30 obtains distances between the different production points, step 64. The control unit 30 may calculate these distances based on the length of transportation routes between the production points. As an alternative these distances may be stored in the database 18 and the control unit 30 fetch them therefrom. The control unit 30 may here obtain all the distances. As an alternative it may only obtain the distances between the production points that the machine is travelling between in the current chart. In this example the fourth machine 28 is only travelling from the fourth PP₄ to the second production point PP₂, from the second PP₂ to the first production point PP₁ and from the first PP₁ to the third production point PP₃. This means that only the transportation distance between the first and the second production point PP₁-PP₂, the transportation distance between the first and the third production point PP₁ - PP₃ and the transportation distance between the second and fourth production points PP₂ - PP₄ need to be obtained.

Thereafter the control unit 30 obtains the machine speed, step 66. This may be received from the machine itself. As an alternative it is possible that also the machine speed is stored in the database 18 and fetched therefrom by the control unit 30. After this data has been obtained the control unit 30 obtains the transportation time between the activities, step 68, or rather the transportation time between the production points where the consecutive activities of the machine are scheduled to take place. This can be done through the control unit 30 calculating the transportation time based on the machine speed and transportation distances. As an alternative it is possible that also this data has been determined in advance and stored in the database 18 or internally in the computer 12. This means that there may be pre-existing knowledge of how fast the fourth machine 28 travels between the different production points. Such speed data may also comprise directional data. There may therefore exist a transportation time for each direction of travel between two production points. Therefore there may be a transportation time provided for each machine and direction between all production points. If a transportation time already exists in the system, the obtaining of machine speed may be omitted. It is furthermore not necessary to obtain the transportation times of both directions, but only of the directions actually travelled by the machine.

When the transportation times have been obtained, the control unit 30 then compares the transportation end time with the scheduled start time of a following activity, step 70. The transportation time may here be considered to start immediately after a previous activity has been finished. The end time of this previous activity, scheduled or adjusted, may therefore be considered to be the transportation start time, where the transportation end time is the sum of the transportation time and the transportation start time.

If now the transportation end time is later than the scheduled start time of the following activity, step 72, then the activities performed by the machine are interconnected also using a too-short indication, step 76. This means that if the end of the transportation time from a previous activity is after the scheduled start time of a following activity, then an indication that the transportation time is too short is generated. If however the transportation end time is not later than the scheduled start time of the following activity, then interconnections are shown, but without a too-short indication, step 74. The generation of a too-short indication may also comprise the generation of an alarm.

How the activities performed by the machine may be interconnected is shown in fig. 10. The fourth machine 28 is in fact first involved in a sixth activity A₆ at the fourth production point PP₄. This is followed by the fourth machine 28 performing a seventh activity A₇ at the second production point PP₂, an eighth activity A₈ at the first production point PP₁ and finally a ninth activity A₉ at the third production point PP₃. The chain of activities linked to a machine is in this part of the invention indicated through interconnecting these activities with a number of lines. The sixth activity A₆ is thus connected to the seventh activity A₇ with a first line L₁, the seventh activity A₇ is connected to the eight activity A₈ with a second line L₂ and the eighth activity A₈ is connected to the ninth activity A₉ with a third line L₃.

In the presentation of these lines the distance between one production point and another may furthermore be coded into the interconnections or lines between the consecutive activities performed at these production points. This means that the distance between the second and fourth production points PP₂ - PP₄ is coded into the first line L₁, the distance between the first and the second production points PP₁ - PP₂ is coded into the second line L₂ and the distance between the first and the third production points PP₁ - PP₃ is coded into the third line L₃.

The distance may here be coded through providing variations of the thickness of the lines, where a thicker line may indicate a shorter distance or vice versa. It may also be provided through variations of the length of the lines, where longer lines may indicate longer distances.

Here also the transportation time from one of the production points to the other may be coded into the interconnection of consecutive activities at the two different production points. The transportation time may for instance be coded as various degrees of transparency of the lines.

The above mentioned too-short indication may also be coded into the lines, where a line representing a too-short indication may have another color or shape than the rest of the lines. A too-short indication may for instance be provided as a red line or hatched line, which is schematically shown for the second line L₂ in fig. 10.

In this second part of the invention the chain of activities of a specific machine is visualized in a production point schedule and at the same time the travel distance and also the travel time between the activities is considered. The control unit 30 furthermore automatically draws the lines between all activities the specific machine is scheduled for. The distance between the activities is also taken into account for instance using a distance table or using an actual 3D map where the color of the line may represent if the time is enough to move the machine between the activities.

The process monitoring computer may, as was previously described, preferably be provided in the form of one or more processors together with computer program memory including computer program code for performing the present invention. This computer program code may also be provided on one or more data carriers which perform the functionality of the present invention when the program code thereon is being loaded in process monitoring computer. One such data carrier 78 with computer program code 80, in the for of a CD ROM disc, is schematically shown in fig. 12.

There are many variations of the invention that are possible apart from those already mentioned It is for instance possible that the two versions of the invention are provided separately from each other. One need not be provided together with the other. It is furthermore possible that no distances between production points are obtained or coded into the lines in the second version. It is also possible that the transportation time is not coded into the lines. In some versions of the invention only a too-long indication is included. In other variations this indicator may be omitted as well. It can therefore be seen that the invention is only to be limited by the following claims.

## Claims

1. A method of evaluating consequences of a delayed activity (A₁) in an industrial process, the activity being performed at least partly via a machine (26) and presented (40) for an operator in a chart depicting consecutive activities performed at different production points (PP₁, PP₂, PP₃, PP₄), the method comprising the steps of:
- receiving (44) an operator selection of simulation of delay in the activity (A₁) performed by the machine (26), which activity is an originally delayed activity,
- determining (46) the delays (D_{P}) of later activities (A₂, A₃) of the same machine, which activities are caused primary delayed activities (A₂, A₃),
- determining (47) for the originally delayed activity and each caused primary delayed activity if a following activity will be delayed, where such a following activity being delayed is a caused secondary delayed activity (A₄, A₅),
- determining (48) the delays (Dₛ) of the caused secondary delayed activities, and
- presenting (50) all the delays in the chart.

2. The method according to claim 1, wherein each activity is originally presented with a scheduled starting time (SST) and a scheduled end time (SET).

3. The method according to claim 2, wherein the delays of the caused primary and secondary delayed activities are presented through adjusting the scheduled starting and end times with the corresponding delay.

4. The method according to claim 3, wherein a delay of a caused secondary delayed activity is presented through visualizing the difference between the adjusted end time and the scheduled end time.

5. The method according to any of claims 3 or 4, wherein the delay of the primary delayed activity is presented through visualizing the difference between the adjusted starting time and the scheduled starting time.

6. The method according to any of claims 2 - 5, wherein the original delayed activity is presented through adjusting the scheduled end time of the activity.

7. The method according to claim 6, wherein the delay of the original delayed activity is shown as a change in a part of the presentation of the activity.

8. The method according to any previous claim, wherein the delay of a caused primary delayed activity is determined as the delay of the original delayed activity adjusted with possible intermediate periods of inactivity and times of transportation.

9. The method according to any previous claim, further comprising comparing (52) the delayed activities with a scheduled critical activity (T3) and indicating if any such delayed activity coincides with the critical activity.

10. The method according to claim 9, wherein the indicating comprises generating (56) an alarm if the delayed activity coincides with the critical activity.

11. The method according to any previous claim, further comprising receiving (42) a problem indication from the machine.

12. The method according to any previous claim, wherein the chart is a Gantt chart.

13. The method according to any previous claim, wherein the process is a mining process.

14. A process monitoring computer (12) for evaluating consequences of a delayed activity (A₁) in an industrial process, the activity being performed at least partly via a machine (26) and presented for an operator in a chart depicting consecutive activities performed at different production points (PP₁, PP₂, PP₃, PP₄), the process monitoring computer comprising a control unit (30) configured to
- receive an operator selection of simulation of delay in the activity (A₁) performed by the machine (26), which activity is an original delayed activity,
- determine the delays (D_{P}) of later activities (A₂, A₃) of the same machine, which activities are caused primary delayed activities (A₂, A₃),
- determine for the original delayed activity and each caused primary delayed activity if a following activity has been delayed, where such a following activity being delayed is a caused secondary delayed activity (A₄, A₅),
- determine the delays (Dₛ) of the caused secondary delayed activities, and
- present all the delays in the chart via a display (34) of the operator.

15. The process monitoring computer according to claim 14, wherein each activity is originally presented with a scheduled starting time (SST) and a scheduled end time (SET).

16. The process monitoring computer according to claim 15, wherein the control unit is configured to present delays of the caused primary and secondary delayed activities through adjusting the scheduled starting and end times with the corresponding delay.

17. The process monitoring computer according to claim 14 or 15, wherein the control unit is configured to present a delay of a caused secondary delayed activity through visualizing the difference between the adjusted end time and the scheduled end time.

18. The process monitoring computer according to any of claims 14 - 17, wherein the control unit is configured to present the delay of the primary delayed activity through visualizing the difference between the adjusted starting time and the scheduled starting time.

19. The process monitoring computer according to claim 18, wherein the control unit is configured to present the original delayed activity through adjusting the scheduled end time of the activity.

20. The process monitoring computer according to any of claims 14 - 19, wherein the control unit is further configured to compare all delayed activities with at least one critical activity (T3) and indicate if any such delayed activity coincides with the critical activity.

21. The process monitoring computer according to claim 20, wherein the control unit is further configured to generate an alarm if any delayed activity coincides with the critical activity.

22. The process monitoring computer according to any of claims 14 - 21, wherein the control unit is further configured to receive a problem indication from the machine.

23. A computer program product for evaluating consequences of a delayed activity (A₁) in an industrial process, the activity being performed at least partly via a machine (26) and presented for an operator in a chart depicting consecutive activities performed at different production points (PP₁, PP₂, PP₃, PP₄), said computer program product being provided on a data carrier (78) comprising computer program code (80) configured to cause the process monitoring computer (12) to, when said computer program code is loaded into the process monitoring computer (12),
- receive an operator selection of simulation of delay in the activity (A₁) performed by the machine (26), which activity is an original delayed activity,
- determine the delays (D_{P}) of later activities (A₂, A₃) of the same machine, which activities are caused primary delayed activities (A₂, A₃),
- determine for the original delayed activity and each caused primary delayed activity if a following activity has been delayed, where such a following activity being delayed is a caused secondary delayed activity (A₄, A₅),
- determine the delays (D_{S}) of the caused secondary delayed activities, and
- present all the delays in the chart.
